# EUROPEAN PATENT APPLICATION

(11) **EP 4 582 298 A1**
(43) Date of publication of application: **09.07.2025**
(21) Application number: 23951048.0
(22) Date of filing: 30.10.2023
(51) Int. Cl.: B60L 53/18, H02G 11/00, H02G 11/02, B60L 53/60

(54) **CHARGER**

(71) Applicant: LG ELECTRONICS, INC., Seoul 07336 (KR)
(72) Inventor: SHIN, Jongyeon, Seocho-gu Seoul 06772 (KR); KIM, Jintae, Seocho-gu Seoul 06772 (KR); PARK, Jayhee, Seocho-gu Seoul 06772 (KR)
(74) Representative: Vossius & Partner Patentanwälte Rechtsanwälte mbB
(86) International application number: PCT/KR2023/017007
(87) International publication number: WO 2025/095153

(57) **Abstract**

A charger according to the present embodiment may comprise; a charging cable provided with a coupler connected to a vehicle and connected to a charger body; a spring balancer installed on the charger body and mounting one side of the charging cable; and an output interface disposed on the charger body. The spring balancer may comprise: a housing; a rotor rotatably disposed inside the housing; a spring connected to the rotor; and a wire wound around or unwound from the rotor, A charger may comprise a sensor detecting a rotation of the rotor. The output interface may output information visually or audibly according to a sensing result of the sensor.

## Description

### [Technical Field]

The present disclosure relates to a charger having a charging cable.

### [Background Art]

A charger is a device used to charge a battery.

An example of a charger may be an electric vehicle charger that charges a vehicle such as an electric vehicle, and electric energy is supplied to the battery of the electric vehicle by connecting the charging connector provided at the end of the charging cable to the connection inlet installed in the electric vehicle.

In order to use the charging cable, the coiled charging cable is unwound and pulled out and then used. Due to its length, the pulled charging cable may touch the floor in the middle, and the part that touches the floor may be damaged, such as worn out by repeated use, and may be contaminated by contaminants on the floor.

An example of a charging device that can charge a battery is an electric vehicle charging device disclosed in Korean Patent Publication No. 10-2423210 B (announced on July 21, 2022), and the electric vehicle charging device comprises: a charger that provides a plurality of charging cables of different types; a communication-control unit that is connected to the charger and controls the charging cables; a motor drive that communicates with the communication-control unit; a support that is a fixed facility located on the top of the charger; A plurality of electric winches fixed to the support and disposed on the upper part of the charger; a plurality of spring balancers having one side connected to each of the plurality of electric winches and the other side connected to each of the plurality of charging cables.

### [Disclosure]

### [Technical Problem]

The present embodiment provides a charger capable of improving the durability of a spring balance.

The present embodiment provides a charger that minimizes the separation of a charging cable from a charger body.

### [Technical Solution]

A charger according to the present embodiment may comprise; a charging cable provided with a coupler connected to a vehicle and connected to a charger body; a spring balancer installed on the charger body and mounting one side of the charging cable; and an output interface disposed on the charger body.

The spring balancer may comprise: a housing; a rotor rotatably disposed inside the housing; a spring connected to the rotor; and a wire wound around or unwound from the rotor,

The charger may comprise a sensor detecting a rotation of the rotor.

The output interface may output information visually or audibly according to a sensing result of the sensor.

A magnet is disposed on the rotor, and the sensor may comprise a magnetic sensor sensing the magnet.

The housing may be provided with an opening and the opening is formed in an area facing the sensor.

The sensor may be mounted on one of the housing and the charger body.

The output interface may display at least two colors according to a rotational speed of the rotor.

The output interface may comprise a speaker outputting voice information according to a rotational speed of the rotor.

The spring balancer may further comprise a bushing fixed to the housing and through which the wire passes; and a stopper fixed to the wire and contacts the bushing when the wire is released by a set length.

The spring balancer may further comprise a clip on which the charging cable is mounted; and a clip fastening member to which an end of the wire is connected and to which the clip is fastened.

A through hole through which the wire passes is formed in the bushing, a reduced portion is formed on the stopper, and a cross- sectional are of the reduced portion is gradually reduced, and a gradient portion into which the reduced portion is inserted may formed in the bushing.

The bushing may comprise a fixed bushing in which a coupling portion is formed to be coupled to the housing; and a buffer bushing in which the gradient portion is formed.

### [Advantageous Effect]

According to the present embodiment, since the output interface can guide the wire so that it is not excessively pulled, it is possible to minimize breakage or damage to a spring, etc. that may occur when the wire is excessively pulled, and the durability of the spring balancer can be improved.

In addition, if the stopper is caught in the bushing, the wire can no longer be pulled out, so the charging cable cannot be additionally pulled out, and excessive pulling out or damage to the wire or charging cable can be minimized.

### [Description of Drawings]

FIG. 1 is a perspective view of a charger according to the present embodiment,
FIG. 2 is a view illustrating the inside of a charger according to the present embodiment,
FIG. 3 is an exploded perspective view of a spring balancer according to the present embodiment.
FIG. 4 is a partially cut-away perspective view of a spring balancer according to the present embodiment,
FIG. 5 is a side view showing a portion of a spring balancer according to the present embodiment,
FIG. 6 is a control block diagram of a charger according to the present embodiment,
FIG. 7 is a view showing the inside of a housing of a spring balancer according to the present embodiment,
FIG. 8 is a view showing a charging cable according to the present embodiment before the charging cable is pulled out to the maximum pull-out distance,
FIG. 9 is a view showing a charging cable according to the present embodiment when the charging cable is pulled out to the maximum pull-out distance.

### [Mode for Carrying out the Invention]

### [Best Mode]

Hereinafter, specific embodiments of the present invention will be described in detail with reference to the drawings.

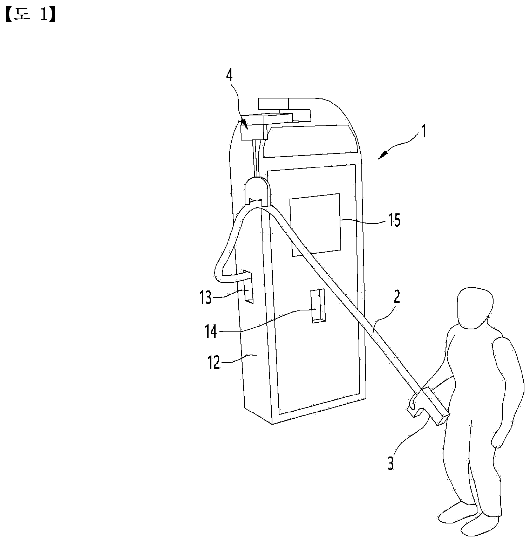

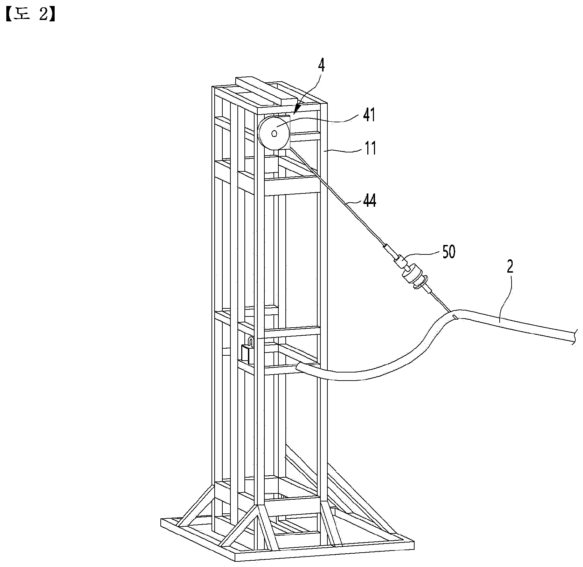

FIG. 1 is a perspective view of a charger according to the present embodiment, and FIG. 2 is a view illustrating the inside of a charger according to the present embodiment.

The charger may comprise a charger body 1 and a charging cable 2 connected to the charger body 1.

The charger body 1 may comprise a frame 11 and an outer case 12 disposed on the frame 11.

The charger body 1 may comprise a power supply unit (not shown) that supplies power to the charging cable 2.

The power supply unit may be supported by the frame 11. The power supply unit may be disposed on the inside of the outer case 12 and may be protected by the outer case 12.

The outer case 12 may be formed by a combination of a plurality of cover members.

A cable outlet 13 through which the charging cable 2 passes may be formed on the outer case 12.

The charging cable 2 may be drawn out to the outside of the charger body 2 through the cable outlet 13.

The charger body 2 may be provided with a coupler holder 14 on which a coupler 3 provided in the charging cable 2 is placed. The coupler holder 14 may be provided on the front or side plate of the outer case 12.

A display 15 capable of displaying various information such as charging information may be placed on the outer case 12.

The display 15 may be disposed on the front plate of the outer case 12.

A coupler 3 connected to a vehicle may be provided on the charging cable 2.

A connection port that can be connected to a power supply unit (not shown) built into the charger body 1 may be placed at one end of the charging cable 2.

A coupler 3 may be disposed at the other end of the charging cable 2.

The connection port may be connected to the charger body 1 and fixed, and the coupler 3 may be movable outside the charger body 1.

The length of the portion (hereinafter, referred to as the pull-out cable) of the charging cable 2 that is pulled out of the charger body 1 may be changed depending on the position of the coupler 3.

The length of the pull-out cable of the charging cable 2 may be changed when the coupler 3 is pulled.

The coupler 3 may be a charging gun, and the user may hold the coupler 3 and use the charging cable 2.

The coupler 3 may have a vibration generating portion that generates haptic vibration formed.

The charger may comprise a spring balancer 4.

The spring balancer 4 may be installed in the charger body 1. The spring balancer 4 may be disposed on the upper portion of the charger body 1.

One side of the charging cable 2 may be mounted on the spring balancer 4. One side of the charging cable 2 may be a portion between the connection port and the connector 3 of the charging cable 2.

The spring balancer 4 may prevent the charging cable 2 from sagging and may limit the rapid insertion or withdrawal of the charging cable 2.

The spring balancer 4 may be a device whose tensile force is adjustable, and if there is no pulling force (external force), it is restored to its original state by the restoring force of the spring, but if there is a pulling force (external force), it may withstand the pulling force and ensure the stability of the position.

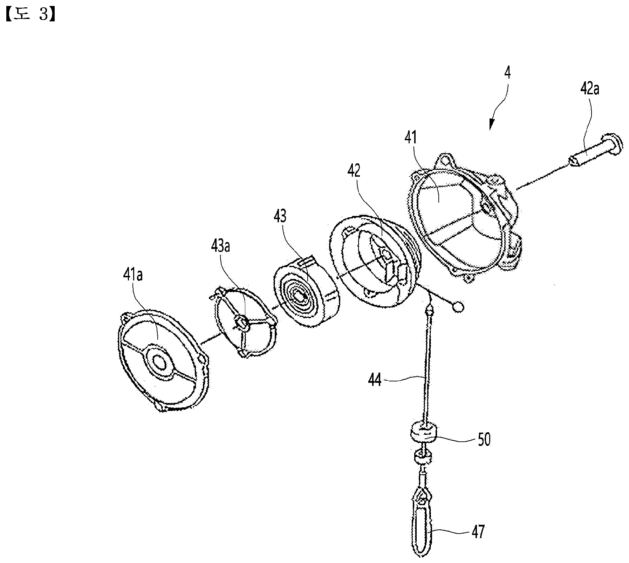

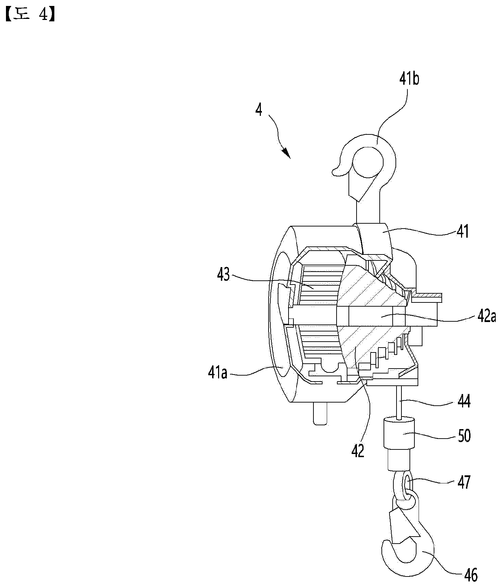

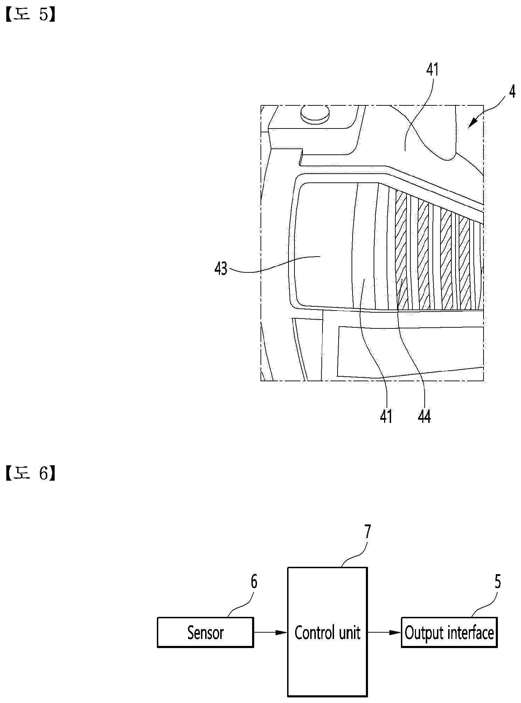

FIG. 3 is an exploded perspective view of a spring balancer according to the present embodiment. FIG. 4 is a partially cut-away perspective view of a spring balancer according to the present embodiment, and FIG. 5 is a side view showing a portion of a spring balancer according to the present embodiment,

The spring balancer 4 may comprise a housing 41; a rotor 42 rotatably disposed inside the housing 41; a spring 43 connected to the rotor 42; and a wire 44 wound around or unwound from the rotor 42.

The spring balancer 4 may be a device that, when the wire 44 is pulled, prevents the wire 44 from returning to its original position and maintains its position, and the tension of the spring 43 may need to be adjusted in advance.

An opening 45 may be formed in the housing 41. The opening 45 may be formed in an area facing described below a sensor 6, and the sensor 6 may sense a rotation angle, etc., of the rotor 42, through the opening 65.

A space may be formed inside the housing 41 to accommodate a rotor 42 and a spring 43.

A cover 41a covering the housing 41 may be coupled to the housing 41.

A mounting hole 41b for mounting a spring balancer 4 may be provided on the housing 41. The mounting hole 41b may be mounted on the outer case 12 shown in FIG. 1 or the frame 12 shown in FIG. 2.

The housing 41 may be mounted to be hung on the outer case 12 or the frame 11.

The rotor 42 may be rotatably supported on a support shaft 42a disposed in the housing 41. An example of the rotor 42 may be a disk or drum rotatably disposed in the housing 41.

An example of the spring 43 may be a plate spring, and may be accommodated inside the housing 41 in a rolled form in a scroll shape.

A spring supporter 43a supporting the spring 43 may be disposed between the housing 41 and the spring 43.

One end of the spring 43 may be fixed to the spring supporter 43a or a cover 41a, and the other end of the spring 43 may be connected to the rotor 42.

One end of the wire 44 may be connected to the rotor 42 and may be wound around the outer surface of the rotor 42.

A clip fastening portion 47 may be connected to the other end of the wire 44.

The spring balancer 4 may further comprise a clip 46 on which the charging cable 2 is mounted; and a clip fastening member 47 to which the end of the wire 44 is connected and to which the clip 46 is fastened.

An outer stopper 50 that comes into contact with the housing 41 and is restrained by the housing 41 may be fixed to a portion close to the clip fastening hole 47 of the wire 44.

The spring balancer 4 may have a drum-shaped structure by the rotor 42, and there may be a limit to the stroke length of the wire 44. If the stroke length of the wire 44 is long, the size of the spring balancer 4 may be large.

The spring balancer 4 may be maintained at a constant force by adjusting the rotation speed according to the stroke of the wire 44 wound around the rotor 42 and by the shape of the spring 43. When a force equivalent to the tensile force is applied to the wire 44, almost no additional external force is required while the wire 44 is released to the maximum stroke of the wire 44.

FIG. 6 is a control block diagram of a charger according to the present embodiment.

The charger may comprise an output interface 5 disposed in the charger body 1, a sensor 6 sensing the rotation of the rotor 42, and a control unit 7 configured to control the output interface 5 according to the sensing result of the sensor 6.

The output interface 5 may output information visually, audibly, or tactilely according to the sensing result of the sensor 6.

An example of the output interface 5 may be a visual interface that visually displays information. An example of the output interface 5 may display at least two colors according to the rotational speed of the rotor 42.

An example of the visual interface may be at least one indicator light that displays various information of the charger.

The indicator light may express a plurality of colors as one indicator light, or may express different colors as the plurality of indicator

Another example of the visual interface may comprise a display 15 that displays various information of the charger.

The indicator light or display may display blue, yellow, red, etc. depending on the degree (i.e., the number of rotations of the rotor 42.) to which the rotor 42 is rotated

The visual interface may express different colors depending on the length of the withdrawal wire among the wires 44.

The visual interface may display blue when the length of the withdrawal wire is 0 to 1 m, yellow when the length of the withdrawal wire exceeds 1 and is less than 1.3 m, and red when the length of the withdrawal wire exceeds 1.3 m.

Another example of the output interface 5 may comprise a speaker that outputs voice information depending on the number of rotations of the rotor 42.

The speaker may be an auditory interface and may output voice information depending on the degree (i.e., the number of rotations of the rotor 42.) to which the rotor 42 is rotated

The auditory interface may output different voice information depending on the length of the lead cable among the charging cables 2.

The auditory interface may output first voice information such as "safe" when the length of the withdrawal wire is 0 to 1 m, output second voice information such as "a little safe" when the length of the withdrawal wire is more than 1 and less than 1.3 m, and output third voice information such as "danger" when the length of the withdrawal wire is more than 1.3 m.

The auditory interface may also output a buzzer, output a buzzer with a first time difference when the length of the withdrawal wire is 0 to 1 m, output a buzzer with a second time difference that is shorter than the first time difference when the length of the withdrawal wire is more than 1 and less than 1.3 m, and output a buzzer with a third time difference that is shorter than the second time difference when the length of the withdrawal wire is more than 1.3 m.

The auditory interface may also output voice information by controlling the intensity, and when the length of the withdrawal wire is 0 to 1 m, it may output low-pitched voice information, and when the length of the withdrawal wire is more than 1 and less than 1.3 m, it may output mid-pitched voice information shorter than the first time difference, and when the length of the withdrawal wire is 1.3 m or more, it may output high-pitched voice information.

The other example of the output interface 5 may be a tactile interface that generates haptic vibration, etc.

The tactile interface may comprise a vibration generating unit disposed in the coupler 3.

The tactile interface may also output tactile information by controlling the time or intensity, and, like the visual interface, may generate different haptic vibrations depending on the length of the withdrawal wire.

It goes without saying that the output interface 5 may comprise a visual interface, an auditory interface, and a tactile interface.

If the output interface 5 outputs visual information, voice information, or tactile information, excessive pulling of the charging cable 2 may be primarily limited, and damage to the spring 44 or the like due to external force may be minimized.

The sensor 6 may detect the rotation of the rotor 42 and sense the length of the portion (withdrawal wire) of the wire 44 that is exposed to the outside of the housing 41.

The sensor 6 may detect the rotor 42 of the spring balancer 4. The sensor 6 may be a sensor that may detect the degree to which the rotor 41 has rotated, and by sensing the rotation angle of the rotor 41, the length of the wire 44 released from the rotor 41 may be confirmed.

The sensor 6 may be an optical sensor that optically senses the rotation angle of the rotor 42, an ultrasonic sensor that senses the rotation angle of the rotor 42 using ultrasonic waves, or a magnetic sensor that senses the rotation angle of the rotor 42 using a magnetic field.

Hereinafter, the sensor 6 is described as including a magnetic sensor, but it is of course applicable without limitation to the type as long as it may sense the rotation angle of the rotor 42.

A magnet may be disposed on the rotor 42, and the sensor 6 may comprise a magnetic sensor that senses the magnet.

The sensor 6 may be mounted on one of the housing 41 and the charger body 1.

The sensor 6 may transmit a signal according to the sensing value to the control unit 7.

The control unit 7 may calculate the length of the withdrawal wire according to the signal value transmitted from the sensor 6 and output a control signal to the output interface 5 according to the length of the withdrawal wire.

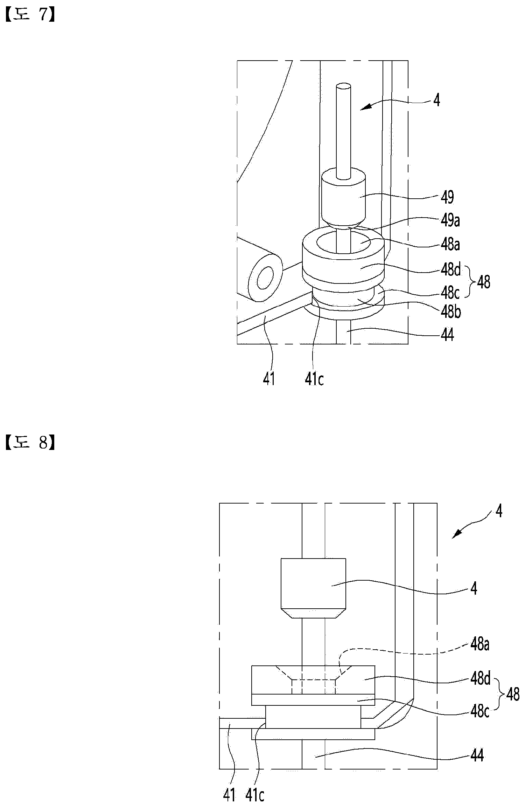

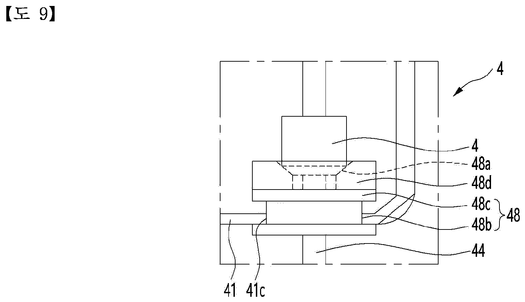

FIG. 7 is a view showing the inside of a housing of a spring balancer according to the present embodiment, FIG. 8 is a view showing a charging cable according to the present embodiment before the charging cable is pulled out to the maximum pull-out distance, and FIG. 9 is a view showing a charging cable according to the present embodiment when the charging cable is pulled out to the maximum pull-out distance.

The spring balancer 4 may further comprise a bushing 48; and a stopper 49.

The bushing 48 may be fixed to the housing 41, and the wire 44 may pass through the bushing 48. A mounting hole 41c in which the bushing 48 is mounted may be formed in the housing 41.

A through hole through which the wire passes may be formed in the bushing 48.

A gradient portion 48a may be formed in the bushing 48.

The gradient portion 48a may be formed in a recessed shape in the bushing 48.

The bushing 48 may comprise a fixed bushing 48c having a coupling portion 48b formed on the fixed bushing 48c, which is coupled to the housing 41.

The coupling portion 48b may comprise a recessed recess in the outer surface of the fixed bushing 48c.

The bushing 48 may further comprise a buffer bushing 48d having a gradient portion 48a formed therein.

An example of the bushing 48 may be a fixed bushing 48c and a buffer bushing 48d formed integrally.

The other example of the bushing 48 may comprise a fixed bushing 48c formed of metal or plastic, and a buffer bushing 48d formed of a buffering material such as rubber.

The stopper 49 may be fixed to the wire 44. The stopper 49 may be caught by contacting the bushing 48 when the wire 44 is released by a set length.

Here, the set length may be the maximum draw length of the draw wire, and may be, for example, 1.3 m.

The set length may be the length from the mounting hole 41c of the charging cable 2 to the stopper 49.

The stopper 49 may be formed with a reduced portion 49a whose cross-sectional area is gradually reduced, and the reduced portion 49a may be inserted into the gradient portion 48a of the bushing 48.

The reduced portion 49a may be formed at one end of the stopper 49 for example, the lower end of the stopper 49.

A person with impaired mobility, such as an infant or toddler, may continue to pull the charging cable 2, but if the stopper 49 comes into contact with the bushing 48 and gets caught in the bushing 48, the wire 44 may no longer be pulled out, the charging cable 2 may no longer be pulled out, excessive pulling out of the charging cable 2 may be secondarily limited, and damage to the spring 44 or the like due to external force may be minimized.

The bushing 48 and stopper 49 may forcibly brake the wire 44, thereby preventing excessive load from being applied to the wire 44, and minimizing breakage of the wire 44 or damage to the spring 43.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but rather to explain it, and the scope of the technical idea of the present disclosure is not limited by these embodiments.

The scope of protection of the present disclosure should be interpreted in accordance with the claims below, and all technical ideas within the equivalent scope should be construed as being comprised in the scope of rights of the present disclosure.

## Claims

1. A charger comprising;
a charging cable provided with a coupler connected to a vehicle and connected to a charger body;
a spring balancer installed on the charger body and mounting one side of the charging cable; and
an output interface disposed on the charger body,
wherein the spring balancer comprises:
a housing;
a rotor rotatably disposed inside the housing;
a spring connected to the rotor; and
a wire wound around or unwound from the rotor,
wherein the charger further comprises a sensor detecting a rotation of the rotor,
wherein the output interface outputs information visually or audibly according to a sensing result of the sensor.

2. The charger of claim 1,
wherein a magnet is disposed on the rotor;
wherein the sensor comprises a magnetic sensor sensing the magnet.

3. The charger of claim 1,
wherein the housing is provided with an opening and the opening is formed in an area facing the sensor.

4. The charger of claim 1,
wherein the sensor is mounted on one of the housing and the charger body.

5. The charger of claim 1,
Wherein the output interface displays at least two colors according to a rotational speed of the rotor.

6. The charger of claim 1,
wherein the output interface comprises a speaker outputting voice information according to a rotational speed of the rotor.

7. The charger of claim 1,
wherein the spring balancer further comprises
a bushing fixed to the housing and through which the wire passes; and
a stopper fixed to the wire and contacts the bushing when the wire is released by a set length.

8. The charger of claim 7,
wherein the spring balancer further comprises
a clip on which the charging cable is mounted; and
a clip fastening member to which an end of the wire is connected and to which the clip is fastened.

9. The charger of claim 7,
wherein a through hole through which the wire passes is formed in the bushing,
wherein a reduced portion is formed on the stopper, and a cross- sectional are of the reduced portion is gradually reduced,
wherein a gradient portion into which the reduced portion is inserted is formed in the bushing.

10. **11.** The charger of claim 9,
wherein the bushing comprises
a fixed bushing in which a coupling portion is formed to be coupled to the housing; and
a buffer bushing in which the gradient portion is formed.
